(19) Europäisches Patentamt
European Patent Office
Office européen des brevets

(11) Veröffentlichungsnummer: **0 099 965**
**B1**

(12) # EUROPÄISCHE PATENTSCHRIFT

(45) Veröffentlichungstag der Patentschrift: **16.10.85**

(51) Int. Cl.⁴: **C 08 G 65/44**

(21) Anmeldenummer: **83104422.7**

(22) Anmeldetag: **05.05.83**

(54) **Verfahren zur Herstellung von hochmolekularen Polyphenylenoxiden.**

(30) Priorität: **02.07.82 DE 3224691**

(43) Veröffentlichungstag der Anmeldung: **08.02.84 Patentblatt 84/6**

(45) Bekanntmachung des Hinweises auf die Patenterteilung: **16.10.85 Patentblatt 85/42**

(84) Benannte Vertragsstaaten: **AT BE DE FR GB IT NL SE**

(56) Entgegenhaltungen:
**DE - A - 1 668 868**
**DE - A - 2 651 074**
**DE - B - 1 595 046**

(73) Patentinhaber: **CHEMISCHE WERKE HÜLS AG, - RSP Patente / PB 15 - Postfach 13 20, D-4370 Marl 1 (DE)**

(72) Erfinder: **Bartmann, Martin, Dr., Burgstrasse 35, D-4350 Recklinghausen (DE)**
Erfinder: **Bax, Hanns-Jörg, Dr., Lipper Weg 193, D-4370 Marl (DE)**
Erfinder: **Burzin, Klaus, Dr., Wellerfeldweg 164, D-4370 Marl (DE)**
Erfinder: **Ribbing, Wilfried, Dr., Heesternweg 20, D-4270 Dorsten 12 (DE)**

EP 0 099 965 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung ist ein Verfahren zur Herstellung hochmolekularer Polyphenylenoxide (PPO) durch oxidative Kupplung eines diorthosubstituierten Phenols in Gegenwart eines Katalysatorkomplexes aus einem Kupfersalz und einem Amin sowie eines Aktivators aus einem mehrwertigen Alkohol, einer Alkaliverbindung und ggf. dem Hydrobromid eines sekundären Amins.

PPO und Verfahren zu ihrer Herstellung sind bekannt. Sie werden z. B. in Bühler „Spezialplaste" (Akademieverlag Berlin 1978) sowie in den US-PSS Nrn. 3306874 und 3306875 und der DE-AS Nr. 2217161 beschrieben.

Im industriellen Bereich haben sich die Verfahren durchgesetzt, bei denen diorthosibstituierte Phenole in Gegenwart von Sauerstoff durch einen Kupferaminkomplex oxidativ gekuppelt werden.

Hohe PPO-Molekulargewichte lassen sich mit dem Verfahren der DE-OS Nr. 2446425 erzielen. Trotzdem wird man in der Praxis dieses Verfahren vermeiden, da im Überdruckbereich gearbeitet werden muss. Dies hat einen erheblichen apparativen und sicherheitstechnischen Mehraufwand zur Folge.

Die französische Patentschrift FR-PS Nr. 1440527 beschreibt ein Verfahren der Emulsionspolymerisation von PPO, wobei als Emulsionsmittel u. a. die Kombination aus Oleinsäure und Triethanolamin eingesetzt wird.

Das Verfahren der SU-PS Nr. 335257 zur Herstellung von PPO durch Oxidation von 2,6-Dimethylphenol mit Sauerstoff geht von einem Katalysator aus, der metallisches Kupfer, ein Salz des zweiwertigen Kupfers, Methanol und ein Amin enthält.

In der DE-OS Nr. 2228071 wird ein Verfahren zur Herstellung von PPO beschrieben, nach dem Phenole in Gegenwart eines Kupferaminkomplexes und eines Metallbromids mit Sauerstoff behandelt werden. Während für Alkali- und Erdalkalibromide ein beschleunigender Effekt nachgewiesen wurde, „scheinen nichtmetallische Bromide, z. B. Ammoniumbromid, keine Aktivatoren zu sein".

In der japanischen Patentschrift Sho-48-32793 wird ein Katalysator aus

1. einem Kupfer(I)-salz,
2. einer alkalisch reagierenden Verbindung eines Alkali- oder Erdalkalielements, wie z. B. Lithiumcarbonat, Natriumhydroxid oder Kaliumacetat, und
3. einem Nitril, z. B. Propionitril oder Phthalodinitril

eingesetzt. Die Oxidation erfolgt mit Sauerstoff bzw. einem Gemisch aus Sauerstoff und Luft im Verhältnis 1:1.

Die bisherigen Verfahren haben sich in der Praxis als noch nicht befriedigend erwiesen. Als Oxidationsmittel ist meist Sauerstoff erforderlich. Abgesehen von den höheren Kosten, mit denen die Verwendung von Sauerstoff etwa im Vergleich zu Luft verbunden ist, beinhaltet der Einsatz von reinem Sauerstoff auch ein erhöhtes Sicherheitsrisiko. Es wird vielfach Benzol oder ein chlorhaltiges Lösungsmittel, wie z. B. Trichlorethylen, eingesetzt. Aufgrund ihrer möglichen krebserregenden Wirkung sind aber gerade diese Lösemittel zu vermeiden.

Die Reaktionszeit soll unter zwei Stunden liegen, um eine wirtschaftliche Fahrweise zu gewährleisten. Ausserdem kommt es bei längeren Reaktionszeiten sehr leicht zur Bildung von Nebenprodukten, die sich durch die Verfährbung der Reaktionsmischung störend bemerkbar machen.

Schliesslich ist man auch an einem hohen Polymerisationsgrad interessiert. Für die Herstellung von Fäden, Fasern, Überzügen und anderer Erzeugnisse ist ein Polymerisationsgrad von 100 erforderlich (vgl. DE-PS Nr. 2012443), wünschenswert ist ein Polymerisationsgrad von 250, damit eine spätere Pressverformung vollauf gewährleistet ist; dies entspricht einem J-Wert von 50, d. h. die konzentrationsbezogene relative Viskositätsänderung einer 0,5%igen Lösung des Reaktionsproduktes in Chloroform bei 25° C liegt über 50 ml/g.

Es wurde jetzt ein Verfahren gefunden, mit dem die beschriebenen Anforderungen nicht nur erreicht, sondern sogar übertroffen werden können. Dieses Verfahren beruht darauf, dass als Aktivator ein mehrwertiger Alkohol und eine Alkaliverbindung eingesetzt werden. Besonders hohe Molekulargewichte werden erhalten, wenn der Aktivator zusätzlich das Hydrobromid eines sekundären Amins, insbesondere das des Morpholins, enthält.

Der mehrwertige Alkohol soll höchstens 4 Kohlenstoffatome zwischen 2 Hydroxylgruppen aufweisen. Das Molekulargewicht soll 250 nicht überschreiten. Beispielhaft seien Diole, wie Ethylenglykol, 1,2- und 1,3-Propandiol, 1,4-Butandiol, Neopentylglykol und höherwertige Alkohole, wie Glycerin und Pentaerythrit, genannt.

Als Alkaliverbindung verwendet man die 20 bis 60%ige, vorzugsweise 30 bis 50%ige wässerige Lösung bzw. Suspension eines Alkali- oder Erdalkalihydroxids, wie z. B. Natrium-, Kalium-, Calcium- oder Bariumhydroxid.

Dritter Bestandteil des Aktivators sind ggf. Salze aus sekundären Aminen und Bromwasserstoffsäure. Die Amine können aliphatisch oder heterocyclisch sein. Sie enthalten maximal 5 Kohlenstoffatome. Beispiele für derartige Amine sind Dimethylamin, Diethylamin, Pyrrolidin und Piperidin. Besonders geeignet ist Morpholin.

Grundsätzlich soll die Alkaliverbindung gegenüber dem Hydrobromid des sekundären Amins in Überschuss eingesetzt werden. Auf 100 Mol Phenol kommen 1 bis 25, vorzugsweise 2 bis 10 mol (Erd)Alkalihydroxid, 1 bis 30, vorzugsweise 3 bis 15 mol mehrwertiger Alkohol und ggf. 0,1 bis 20, vorzugsweise 1 bis 7 mol Hydrobromid.

Das Verfahren gemäss dieser Erfindung zeichnet sich vor allem durch folgende Vorteile aus:

1. Es kann Luft anstelle von Sauerstoff als Oxidationsmittel eingesetzt werden.

2. Unter sonst gleichen Bedingungen ergibt das hier beschriebene Vefahren entweder kürzere Reaktionszeiten oder höhere Polymerisationsgrade. Die besten Ergebnisse erhält man mit 2,6-Dimethylphenol.

3. Lösemittel mit einem Gefahrenrisiko lassen sich umgehen.

Das erfindungsgemässe Verfahren lässt sich wahlweise mit Sauerstoff, Sauerstoff-Luft- oder Stickstoff-Luft-Gemischen durchführen, sofern gewährleistet ist, dass das Gasgemisch wenigstens 10% Sauerstoff enthält. Man kann zwar mit Luftgemischen, in denen Sauerstoff angereichert ist, noch bessere PPO-Qualitäten in kürzerer Zeit erreichen, gleichzeitig muss man aber höhere Sicherheitsaufwendungen in Kauf nehmen.

Für den Kupferamin-Katalysator werden, wie bekannt, ein Kupfer(I)- oder ein Kupfer(II)-Salz und ein primäres, sekundäres oder tertiäres Amin verwendet.

Beispiele für geeignete Kupfersalze sind Kupfer(I)-chlorid, Kupfer(I)-acetat, Kupfer(II)-chlorid, Kupfer(II)-acetat, Kupfer(II)-sulfat, Kupfer(II)-carbonat und Kupfer(II)-bromid.

Geeignete Amine sind Butylamin, Dibutylamin, Dimethylamin, Pyridin und andere derartige Amine. Bevorzugt wird Morpholin eingesetzt.

Da Kupfer im Endprodukt stört, wird die Konzentration des Kupferamin-Katalysators möglichst niedrig gehalten, vorzugsweise im Bereich von 0,1 bis 2,5 Mol pro 100 mol Phenol.

Als diorthosubstituierte Phenole werden 2,6-Diarylphenole, insbesondere 2,6-Diphenylphenol, bevorzugt aber 2,6-Di-n-alkylphenole, deren Alkylrest 1 bis 6 C-Atome aufweist, eingesetzt.

Die höchsten Polymerisationsgrade wurden mit 2,6-Dimethylphenol erhalten. Geringfügige Mengen an Verunreinigungen, die durch die Herstellung der Phenole bedingt sind, stören nicht. Üblicherweise geht man von Reaktionslösungen aus, die 5 bis 40 Gew.-% monomeres Phenol enthalten.

Die Polymerisationsreaktion läuft bevorzugt in aromatischen Lösemitteln, wie z. B. Toluol, Xylol und o-Dichlorbenzol, ab. Die allgemeine Verfahrensweise zur Herstellung von PPO ist bekannt. Es hat sich bewährt, zunächst das Lösemittel vorzulegen, dann das Kupfersalz, Amin, den mehrwertigen Alkohol und, falls gewünscht, das sekundäre Ammoniumbromid zuzusetzen und schliesslich eine Mischung aus wässeriger Hydroxidlösung und Phenol im Lösemitel zuzufügen. Danach wird die Polymerisation durch Einleiten des sauerstoffhaltigen Gases in Gang gesetzt.

Die Reaktion wird üblicherweise im Temperaturbereich zwischen 20 und 80° C durchgeführt; besonders günstig ist es, bei Temperaturen zwischen 30 und 40° C zu arbeiten.

Weitere Einzelheiten des erfindungsgemässen Verfahrens gehen aus den Beispielen hervor. Den Vergleichsversuchen ist zu entnehmen, dass weder allein mit Natriumhydroxid noch allein mit Ethylenglykol befriedigende J-Werte erzielt werden. Auch mit einem Aktivator, der aus Natriumhydroxid und Natriumbromid besteht, erzielt man nicht die J-Werte, die erfindungsgemäss erhältlich sind.

*Beispiel 1:*

In einem 2-l-Rührreaktor wurden 800 g Toluol, 2 g Kupfer(II)-chlorid, 200 g Morpholin und 3 g Ethylenglykol vermischt. Nach Zugabe von 100 g 2,6-Dimethylphenol, gelöst in 100 g Toluol und 4 g 50%iger wässeriger NaOH-Lösung wurde durch ein Tauchrohr ein Luftstrom von 200 l/h eingeleitet und die Polymerisation in Gang gesetzt.

Die Temperatur der Reaktionsmischung wurde zwischen 30 und 35° C gehalten. Nach 90 min wurde die Reaktion durch Zugabe von 400 g 50%iger Essigsäure gestoppt. Nach Phasentrennung wurde das Polymer aus der toluolischen Phase durch Zugabe von 800 g Methanol gefällt.

Die konzentrationsbezogene relative Viskositätsänderung (J-Wert) des erhaltenen Polymeren wurde aus einer 0,5%igen Lösung in Chloroform bei 25° C bestimmt und ist in Tabelle 1 enthalten.

*Beispiele 2 bis 8 und A bis E:*

Es wurde wie in Beispiel 1 verfahren, wobei lediglich der Aktivator verändert wurde. Die Ergebnisse sind in Tabelle 1 zusammengefasst.

*Tabelle 1*

Die erfindungsgemässen Beispiele sind durch Zahlen, die Vergleichsbeispiele durch Buchstaben gekennzeichnet.

| Bsp. | Aktivator | J-Wert ml/g |
|---|---|---|
| 1 | 3 g Ethylenglykol<br>4 g NaOH (50%ig) | 54 |
| 2 | 6 g Ethylenglykol<br>2 g NaOH (50%ig) | 56 |
| 3 | 4 g 1,2-Propandiol<br>4 g NaOH (50%ig) | 52 |
| 4 | 4,5 g Glycerin<br>4 g NaOH (50%ig) | 54 |
| 5 | 3 g Ethylenglykol<br>5 g Morpholiniumbromid<br>4 g NaOH (50%ig) | 70 |
| 6 | 3 g Ethylenglykol<br>5 g Diethylammoniumbromid<br>4 g NaOH (50%ig) | 67 |
| 7 | 6 g Ethylenglykol<br>7,5 g Morpholiniumbromid<br>4 g NaOH (50%ig) | 72 |
| 8 | 4,5 g Glycerin<br>5 g Morpholiniumbromid<br>4 g NaOH (50%ig) | 70 |
| A | — | 35 |
| B | 5 g Morpholiniumbromid | 44 |
| C | 3 g Ethylenglykol | 46 |
| D | 4 g NaOH (50%ig) | 40 |
| E | 4 g NaOH (50%ig)<br>5 g NaBr | 42 |

**Patentansprüche**

1. Verfahren zur Herstellung hochmolekularer Polyphenylenoxide mit einer konzentrationsbezo-

genen relativen Viskositätsänderung grösser als 50 ml/g, gemesen in einer 0,5%igen Lösung in Chloroform bei 25° C, durch oxidative Kupplung eines diorthosubstituierten Phenols der Formel

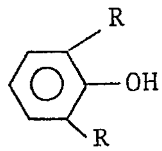

wobei R ein n-Alkylrest mit 1 bis 6 C-Atomen oder ein Aryl-, insbesondere ein Phenylrest ist, in Gegenwart eines Kupferamin-Katalysators und eines Aktivators im Temperaturbereich zwischen 20 und 80° C, dadurch gekennzeichnet, dass man als Aktivator einen mehrwertigen Alkohol und eine 20- bis 60%ige wässerige Lösung bzw. Suspension eines Alkali- oder Erdalkalihydroxids einsetzt, wobei auf 100 mol Phenol x Mole Hydroxid und y Mole mehrwertiger Alkohol kommen und die Bedingungen $1 < x < 25$ und $1 < y < 30$ gelten.

2. Verfahren zur Herstellung von Polyphenylenoxiden nach Anspruch 1, dadurch gekennzeichnet, dass der Aktivator zusätzlich z Mole Hydrobromid eines sekundären Amins enthält und die Bedingungen $0{,}1 < z < 20$ und $z < x$ gelten.

3. Verfahren zur Herstellung von Polyphenylenoxiden nach Anspruch 2, dadurch gekennzeichnet, dass als sekundäres Amin Morpholin eingesetzt wird.

4. Verfahren zur Herstellung von Polyphenylenoxiden nach den Ansprüchen 1 bis 3, dadurch gekennzeichnet, dass man als Oxidationsmittel Luft einsetzt.

5. Verfahren zur Herstellung von Polyphenylenoxiden nach den Ansprüchen 1 bis 4, dadurch gekennzeichnet, dass man 2,6-Di-n-alkylphenole einsetzt, deren Alkylrest 1 bis 6 C-Atome aufweist.

6. Verfahren zur Herstellung von Polyphenylenoxiden nach Anspruch 5, dadurch gekennzeichnet, dass man 2,6-Dimethylphenol einsetzt.

7. Verfahren zur Herstellung von Polyphenylenoxiden nach den Ansprüchen 1 bis 6, dadurch gekennzeichnet, dass man

– zunächst das Lösemittel vorlegt,
– dann das Kupfersalz, den mehrwertigen Alkohol und, falls gewünscht, das sekundäre Ammoniumbromid zusetzt, und
– schliesslich eine Mischung aus wässeriger Hydroxidlösung und Phenol im Lösemittel zufügt.

8. Verfahren zur Herstellung von Polyphenylenoxiden nach den Ansprüchen 1 bis 7, dadurch gekennzeichnet, dass die Bedingungen $2 < x < 10$; $3 < y < 15$ und $1 < z < 7$ gelten.

## Claims

1. A process for the production of a high molecular weight polyphenylene oxide having a concentration-dependent change in relative viscosity of more than 50 ml/g, measured in 0.5% solution in chloroform at 25° C, by oxidative coupling of a di-ortho-substituted phenol of the formula

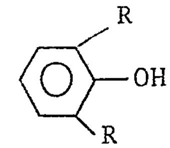

where R is n-alkyl of 1 to 6 carbon atoms or aryl, especially phenyl, in the presence of a copper-amine catalyst and an activator at a temperature from 20 to 80° C, characterised in that a polyhydric alcohol and a 20 to 60% aqueous solution or suspension of an alkali metal or alkaline earth metal hydroxide are introduced, x moles of hydroxide and y moles of polyhydric alcohol being used per 100 mol of the phenol, where $1 < x < 25$ and $1 < y < 30$.

2. A process for the production of a polyphenylene oxide according to Claim 1, characterised in that the activator additionally includes z moles of a hydrobromide of a secondary amine, where $0.1 < z < 20$ and $z < x$.

3. A process for the production of a polyphenylene oxide according to Claim 2, characterised in that morpholine is used as the secondary amine.

4. A process for the production of a polyphenylene oxide according to any of Claims 1 to 3, characterised in that air is used as oxidising agent.

5. A process for the production of a polyphenylene oxide according to any of Claims 1 to 4, characterised in that a 2,6-di-n-alkylphenol having 1 to 6 carbon atoms in the alkyl groups is used.

6. A process for the production of a polyphenylene oxide according to Claim 5, characterised in that 2,6-dimethylphenol is used.

7. A process for the production of a polyphenylene oxide according to any of Claims 1 to 6, characterised in that first the solvent is introduced, then the copper salt, the polyhydric alcohol and, if desired, the secondary ammonium bromide are added, and subsequently a mixture of aqueous hydroxide solution and the phenol in the solvent is added.

8. A process for the production of a polyphenylene oxide according to any of Claims 1 to 7, characterised in that $2 < x < 10$, $3 < y < 15$ and $1 < z < 7$.

## Revendications

1. Procédé de préparation de poly-oxyphénylènes de poids moléculaire élevé, présentant une variation relative de viscosité, rapportée à la concentration, supérieure à 50 ml/g, mesurée dans une solution à 0,5% dans le chloroforme à 25° C, par couplage avec oxydation d'un phénol disubstitué en ortho de la formule:

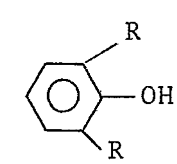

dans laquelle R est un radical n-alkyle comportant de 1 à 6 atomes de carbone ou un radical aryle, en particulier un radical phényle, en présence d'un catalyseur cuivre-amine et d'un activeur, dans l'intervalle de température compris entre 20 et 80° C, caractérisé par le fait que l'on utilise comme activeur un poly-alcool et une solution ou suspension aqueuse à 20-60% d'un hydroxyde alcalin ou alcalino-terreux, à raison de 100 mol de phénol, x mol d'hydroxyde et y mol de poly-alcool, les conditions étant $1 < x < 25$ et $1 < y < 30$.

2. Procédé de préparation de poly-oxyphénylènes selon la revendication 1, caractérisé par le fait que l'activeur contient en outre z mol de bromhydrate d'une amine secondaire, les conditions étant $0{,}1 < z < 20$ et $z < x$.

3. Procédé de préaparation de poly-oxyphénylènes selon la revendication 2, caractérisé par le fait que l'on utilise comme amine secondaire la morpholine.

4. Procédé de préparation de poly-oxyphénylènes selon les revendications 1 à 3, caractérisé par le fait que, comme oxydant, on utilise l'air.

5. Procédé de préparation de poly-oxyphénylènes selon les revendications 1 à 4, caractérisé par le fait que l'on utilise des 2,6-di-n-alkylphénols, dont le radical alkyle présente de 1 à 6 atomes de carbone.

6. Procédé de préparation de poly-oxyphénylènes selon la revendication 5, caractérisé par le fait que l'on utilise le 2,6-diméthylphénol.

7. Procédé de préparation de poly-oxyphénylènes selon les revendications 1 à 6, caractérisé par le fait que:

– on place intialement le solvant,
– on ajoute ensuite le sel de cuivre, le poly-alcool et, si on le désire, le bromure d'ammonium secondaire,
– on ajoute enfin un mélange formé d'une solution aqueuse d'hydroxyde et de phénol dans le solvant.

8. Procédé de préparation de poly-oxyphénylènes selon l'une des revendications 1 à 7, caractérisé par le fait que les conditions sont $2 < x < 10$; $3 < y < 15$ et $1 < z < 7$.